Europäisches Patentamt

European Patent Office

Office européen des brevets

(19)

(11) Publication number: **0 150 119**
**A2**

(12) **EUROPEAN PATENT APPLICATION**

(21) Application number: **85300375.4**

(22) Date of filing: **21.01.85**

(51) Int. Cl.⁴: **B 41 J 3/04**

(30) Priority: **20.01.84 JP 8828/84**
**18.04.84 JP 77747/84**

(43) Date of publication of application:
**31.07.85 Bulletin 85/31**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Tsuzuki, Mitsuo c/o NEC Corporation**
**33-1, Shiba 5-chome**
**Minato-ku Tokyo(JP)**

(72) Inventor: **Katoh, Hidehiko c/o NEC Corporation**
**33-1, Shiba 5-chome**
**Minato-ku Tokyo(JP)**

(72) Inventor: **Suga, Michihisa c/o NEC Corporation**
**33-1, Shiba 5-chome**
**Minato-ku Tokyo(JP)**

(74) Representative: **Pears, David Ashley et al,**
**REDDIE & GROSE 16 Theobalds Road**
**London WC1X 8PL(GB)**

(54) Ink-jet recording system capable of recording half-tones.

(57) In order to obtain an adequate range of image density
for half-tone printing an ink-jet print head assembly (14)
comprises two ink-jet heads (142a, 142b). These are driven
by separate pulse generators (141a, 141b). A comparator (12)
responds to a density signal from an image signal force (11)
and controls a signal distributor (13) for selective energisa-
tion of the two heads. Below a threshold image density the
head (142a) is employed; this has a weaker ink and/or small
nozzle. Above the threshold, the head (142b) is employed
and this has a denser ink and/or a larger nozzle.

EP 0 150 119 A2

./...

Croydon Printing Company Ltd.

FIG. 4

This invention relates to an ink-jet recording system capable of recording half-tones.

An on-demand type ink-jet print head is disclosed in the U.S. Patent No. 3,946,398 entitled "Method and Apparatus for Recording with Writing Fluids and Drop Projection Means Therefor". There, an ink droplet is formed by applying a driving pulse to a piezoelectric element installed on a pressure chamber of the inl-jet print head. As disclosed in the U.S. Patent No. 4,281,333 entitled "Ink-On-Demand Type Ink-Jet Printer with Coordinated Variable Size Drops with Variable Charges", the drop size (volume) may.be.varied by controlling the energy content of a driving pulse. For example, the amplitude and/or the width of the driving pulse may be varied to change the size of a dot recorded on a recording medium.

Therefore, in an ink-jet print head, a half-tone recording can be provided by controlling the energy content of a driving pulse, in response to a signal representing the density of an image to be recorded. However, a droplet-volume range is not so wide that the volume of the ink droplet can be adaquately varied. For example, the volumetric ratio of the maximum-sized ink droplet to the minimum-sized ink droplet is between 2-3, at the greatest. Accordingly, the half-tone reproduction range, in which an image recorded at a predetermined density can be reproduced by only varying the volume of the ink droplets, is restricted to about 0.4 – 1.5 in terms of reflection density. In particular, the half-tone reproducibility of the bright portions of an image is low.

Other known half-tone recording systems include the dither method and the density pattern method. In these methods, the number of dots is increased or decreased in accordance with the density of the image to be recorded, to provide a half-tone reproduction thereof. In order to increase the number of graduations in such an imitation half-tone reproduction system, the number of dots is increased per unit area of the image being subjected to the half-tone reproduction. However, when the dot-recording density of a recording apparatus is constant, the resolution drops.

It is, therefore, an object of this invention to provide an ink-jet recording system capable of recording a hlaf-tone with a high resolution over a wide level range of image to be recorded.

According to this invention, an ink-jet recording system is capable of recording a half-tone. The ink-jet recording system comprises an ink-jet print head assembly composed of at least first and second on-demand ink-jt print heads having first and second recording characteristics different from each other, respectively. When the level of a density signal for a point is less than a predetermined value, the first ink-jet print head ejects an ink droplet in response to the density signal. When the level of the density signal is equal to or higher than the predetermined value, the second ink-jet print head ejects an ink droplet in response to the dinsity signal. Accordingly, a volume of the ink droplet ejected from the ink-jet print head assembly is varied.

Other features and advantages of this invention will be apparent from the following description of preferred embodiments of this invention taken in conjunction with the accompanying drawings, wherein:

Fig. 1 shows an example of an ink droplet forming characteristic of an ink-jet print head to be used in this invention;

Fig. 2 shows an example of a recording characteristic of an ink-jet print head assembly to be used in this invention;

Fig. 3 shows a relationship among a pulse width of a driving pulse, a density signal, and a recorded density for illustrating a principle of this invention; and

Fig. 4 is a block diagram of a first embodiment of this invention.

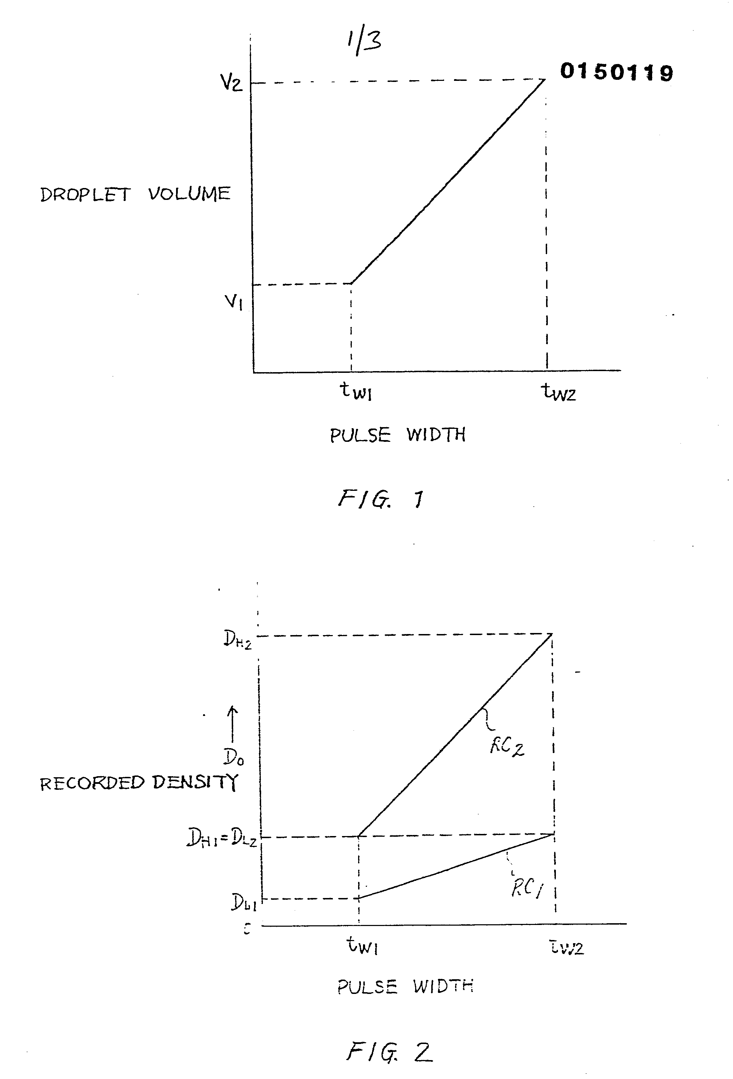

A principle of this invention will be described with reference to Figs. 1 to 3. An on-demand type ink-jet print head to be used for this invention has a droplet formation characteritic, as shown in Fig. 1. The abscissa of Fig. 1 stands for a pulse width tw of a driving pulse applied to the ink-jet print head. The ordinate of Fig. 1 represents a volume V of an ink droplet ejected from the ink-jet head. As understood from Fig. 1, the volume of the ejected ink droplet is proportional to the pulse width of the driving pulse, over the width range from tw1 to tw2. The pulse width of the driving pulse is determined in response to a density signal which is indicative of the density of the image to be recorded. The ink-jet print head to be used for this invention may use an on-demand type ink-jet print head disclosed in the U.S. Patent Application Serial No. 646,377 and in the European Patent Application No. 84305991.6 entitled "ON-DEMAND TYPE INK-JET PRINT HEAD HAVING FLUID CONTROL MEANS".

An on-demand type ink-jet print head assembly to be used for this

- 4 -

0150119

invention has at least first and second on-demand type ink-jet print heads each having an ink droplet forming characteristic as shown in Fig. 1, in which the volume of the ejected ink droplet is proportional to the pulse width of the driving pulse.

The ink-jet head assembly has first and second recording characteristics $RC_1$ and $RC_2$ for the first and second ink-jet print heads, respectively, shown in Fig. 2. The abscissa of Fig. 2 stands for the pulse width tw of the driving pulse applied to the ink-jet print head assembly. The ordinate of Fig. 2 represents a recorded density $D_0$ on a recording medium on which a half-tone recording is made at a constant dot pitch. A dot of a size corresponding to the ink droplet volume V can be recorded on the recording medium by selecting the pulse width tw. The density $D_0$ recorded on a medium at a constant dot pitch is proportional to the dot size, that is, the volume of the ejected ink droplet. As understood from Fig. 2, the first ink-jet print head has the first recording characteristic $RC_1$ for a lower density range from $D_{L1}$ to $D_{H1}$, while the second ink-jet print head has the second recording characteristic $RC_2$ for a higher density range from $D_{L2}(=D_{H1})$ to $D_{H2}$.

To obtain the first and second recording characteristics by means of the ink-jet print head assembly composed of the first and second ink-jet heads, in a first embodiment of this invention, two ink-jet heads identical to each other are used as the first and second ink-jet print heads, which are filled with two kinds of ink in ink density so that the same recorded density can be obtained at both times when the driving pulses having the pulse widths tw2 and tw1 are applied to the first and second ink-jet print heads, respectively.

In a second embodiment of this invention, the same ink in ink density is used to fill both of the first and second ink-jet print heads whose nozzle sizes are different from each other so that the same recorded density can be obtained at both times when the driving pulses having the pulse widths tw2 and tw1 are applied to the first and second ink-jet print heads, respectively.

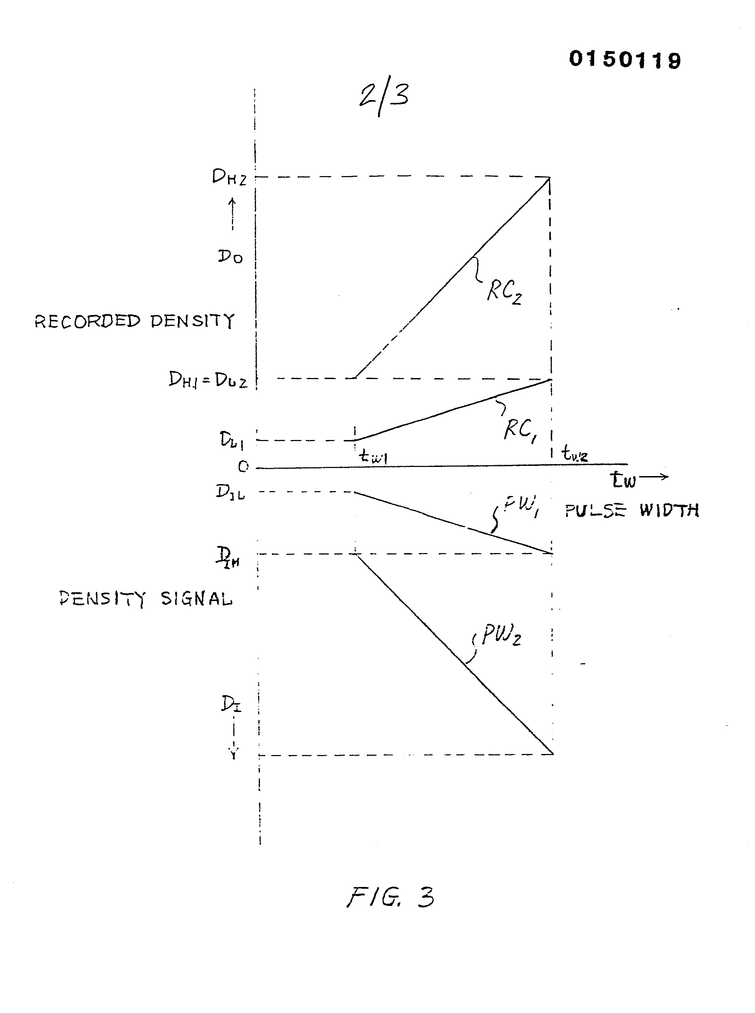

Fig. 3 shows a relationship between the density signal $D_I$ and the pulse width tw, and a relationship between the pulse width tw and the recorded density $D_O$ on the recording medium on which the half-tone recording is made at a constant pitch. A dot of a size corresponding to a level of the density signal $D_I$ can be recorded on the recording medium by selecting the pulse width tw corresponding to the level of the density signal $D_I$. The density $D_O$ recorded on the medium at a constant dot pitch is proportional to the dot size corresponding to the level of the density signal $D_I$.

According to this invention, when the level of the density signal is equal to or higher than the minimum density signal level $D_{IL}$ and lower than a predetermined density signal level $D_{IM}$, that is, in a lower density signal range LR, the first ink-jet print head is applied with a driving pulse having a first density signal vs. pulse width characteristic $PW_1$, as shown in Fig. 3 in which the pulse width of driving pulse is varied from tw1 to tw2 in response to the density signal level in the lower density signal range LR. Therefore, the first ink-jet print head having the first recording characteristic $RC_1$ can record the dot having the recorded density corresponding to the density signal level with the lower recorded density range from $D_{L1}$ to a value less than $D_{H1}$.

When the level of the density signal is equal to or higher than the predetermined density signal level $D_{IM}$, that is, in a higher density

- 6 -

0150119

signal range HR, the second ink-jet print head is applied with a driving pulse having a second density singla vs. pulse width characteristic $PW_2$, as shown in Fig. 3 in which the pulse width of the driving pulse is varied from tw1 to tw2 in response to the density signal level in the higher density signal range HR. Therefore, the second ink-jet print head having the second recording characteristic $RC_2$ can record the dot having the recorded density corresponding to the density signal level with the recorded density range greater than $D_{L2}(=D_{H1})$. Thus, it is possible for the ink-jet print head assembly to record the dot having the recorded density corresponding to the density signal over the whole range.

Although the above description has been made with reference to a case where the ink-jet print head assembly is composed of two ink-jet print heads having the different recording characteristics from each other, three or more ink-jet print heads having different recording characteristics from one another can be used, in which the plural recorded densities in the plural recording characteristics are continued without overlapping to one another.

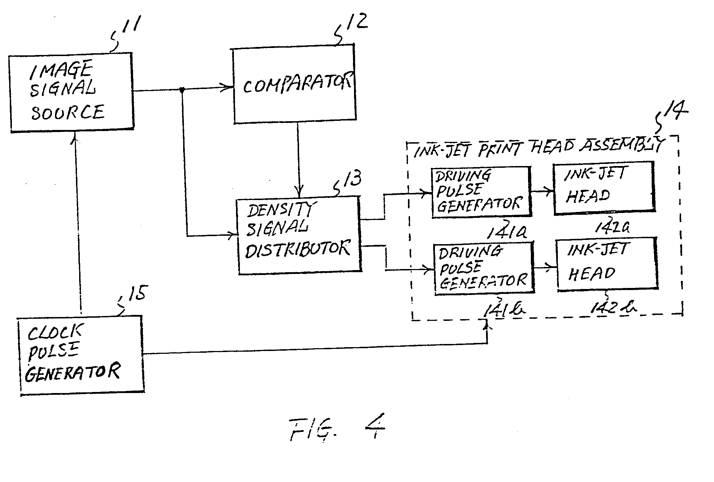

Referring to Fig. 4, the first embodiment of this invention comprises an image signal source 11, a comparator 12, a signal distributor 13, an ink-jet print head assembly 14, and a clock pulse generator 15. The ink-jet print head assembly 14 is composed of first and second driving pulse generators 141a and 141b, and first and second on-demand ink-jet print heads 142a and 142b corresponding to the first and second driving pulse generators 141a and 141b, respectively. The first and second driving pulse generators 141a and 141b have the first and second density signalvs. pulse width characteristics $PW_1$ and $PW_2$ as shown in Fig. 3, respectively. The first and second ink-jet print heads 142a and 142b have the first and second recording characteristics $RC_1$ and $RC_2$ shown in Fig. 3, respectively. The first and second ink-jet print heads 142a and 142b are identical in construction to each other and are filled with two kinds of ink in ink density so that the recorded density $D_{H1}=D_{L2}$ is obtained when the driving pulses having pulse widths tw2 and tw1 are applied the first and second ink-jet print heads 142a and 142b, respectively.

The image signal source 11 operates in synchronism with a clock pulse supplied from the clock pulse generator 15. The image signal source 11 generates the density signal which is indicative of the image to be recorded. The density signal is supplied to the comparator 12 and compared with a reference level $D_{TM}$. When the level of the density signal is lower than the reference level $D_{TM}$, that is, in the lower density signal range LR, the comparator 12 controls the density signal distributor 13 so that the density signal, which is supplied from the image signal source 11, is passed therethrough to the first driving pulse generator 141a having the first density signalvs. pulse width characteristic $PW_1$. The driving pulse is applied to the first ink-jet print head 142a to record the dot on the medium having the recorded density corresponding to the density signal.

When the level of the density signal is equal to or higher than the reference level $D_{TM}$, that is, in the higher density signal range HR, the comparator 12 controls the density signal distributor 13 so that the density signal is passed therethrough to the second driving pulse generator 141b having the second density signal vs. pulse width characteristic $PW_2$. The driving pulse is applied to the second ink-jet print head 142b to record the dot on the medium having the recorded density corresponding to the density signal.

A second embodiment of this invention is indentical to the first embodiment shown in Fig 4 except that ink-jet print heads are used which have nozzle sizes different from each other and are filled with the same ink so that the recorded density $D_{H1} = D_{L2}$ is obtained when the driving pulses have the pulse width tw2 and tw1 are applied to the ink-jet print head respectively.

CLAIMS

1.    An ink-jet recording system for recording points in an image as dots on a recording medium, the system comprising an ink-jet print head assembly (14) responsive to driving pulses for ejecting ink droplets to record the dots on the recording medium, characterised in that the head assembly (14) comprises a plurality of ink-jet heads (142a, b) having different recording characteristics to each other, and by a plurality of means (141a, b) for generating the driving pulses and supplying the driving pulses to the ink-jet heads, respectively and means (12) for comparing a density signal with a predetermined level to control the supply of the driving pulses to the ink-jet heads.

2.    An ink-jet recording system as claimed in claim 1, characterised in that the ink-jet heads (142a, b) are identical in construction to each other and are filled with inks differing in ink density.

3.    An ink-jet recording system as claimed in claim 1, characterised in that the ink-jet heads (142a, b) have nozzles different in size from each other and are filled with inks having the same ink density.

1/3

0150119

DROPLET VOLUME

$V_2$

$V_1$

$t_{W1}$

$t_{W2}$

PULSE WIDTH

*FIG. 1*

RECORDED DENSITY

$D_{H2}$

$D_0$

$D_{H1} = D_{L2}$

$RC_2$

$RC_1$

$D_{L1}$

$t_{W1}$

$t_{W2}$

PULSE WIDTH

*FIG. 2*

FIG. 3

FIG. 4